# EUROPÄISCHE PATENTSCHRIFT

(11) **EP 2 444 291 B1**
(45) Veröffentlichungstag und Bekanntmachung des Hinweises auf die Patenterteilung: **11.12.2019**
(21) Anmeldenummer: 11185646.4
(22) Anmeldetag: 18.10.2011
(51) Int. Cl.: B60T 8/38, B60T 15/04, F16J 15/32, F16J 15/56

(54) **Betriebsbremsventil mit schwingungsgedämpft geführtem Druckstück**
Operating brake valve with vibration-dampened guided pressure pad
Soupape de frein de service dotée d'une plaque d'appui guidée par un amortissement d'oscillations

(30) Priorität: 22.10.2010 DE 102010049306; 18.11.2010 DE 102010051812
(43) Veröffentlichungstag der Anmeldung: 25.04.2012
(73) Patentinhaber: KNORR-BREMSE Systeme für Nutzfahrzeuge GmbH, 80809 München (DE)
(72) Erfinder: Klein, Günter, 72669 Unterensingen (DE); Röckle, Frank, 71229 Leonberg (DE); Häcker, Hans, 74343 Sachsenheim (DE); Ulrich, Manfred, 71696 Möglingen (DE); Schmauder, Thilo, 71732 Tamm (DE); Schabinger, Simon, 75245 Neulingen (DE); Röther, Friedbert, 74389 Cleebronn (DE)
(74) Vertreter: Mattusch, Gundula

(56) Entgegenhaltungen:
- EP-A2- 0 850 814
- DE-A1- 4 032 874
- DE-A1- 19 654 357
- DE-A1-102006 052 239
- DE-C1- 4 303 269

## Beschreibung

Die Erfindung betrifft ein Betriebsbremsventil einer pneumatischen oder elektro-pneumatischen Fahrzeugbremsanlage gemäß dem Oberbegriff von Anspruch 1.

Ein gattungsgemäßes Betriebsbremsventil ist beispielsweise aus der "Technischen Unterrichtung, Druckluftanlagen für Nutzfahrzeuge 2, Geräte" der Robert Bosch GmbH, 2. Ausgabe August 1994, ISDN 1 987 722 016 bekannt.

Bei solchen Betriebsbremsventilen wird die auf ein Fußbremspedal ausgeübte Betätigungskraft über einen stangenförmigen Stößel, der endseitig in der Stößelaufnahme des Druckstücks aufgenommen ist, auf das Druckstück übertragen und von dort über die Federmittel auf den Kolben. Das Druckstück ist dabei unter radialem Spiel am Kolben aufgenommen. Da Axialkräfte vom Druckstück auf den Kolben ausschließlich über die Federmittel übertragen werden, ergibt sich das Problem, dass es dabei zu unerwünschten Schwingungen des Kolbens kommen kann, welche zu undefinierten Stellungen der Ventile des Betriebsbremsventils sowie zu störenden Geräuschen führen.

Die EP 0 850 814 A2 offenbart einen Hauptbremszylinder einer hydraulischen Bremseinrichtung mit zwei Kolben, welche jeweils über einen in einer Nut gehaltenen Doppeldichtungsring gegenüber einer inneren Zylinderwandung gedichtet sind. Der Doppeldichtungsring beinhaltet einen radial inneren O-Ring sowie einen radial äußeren Ring.

Gemäß DE 40 32 874 A1 wird bei einem Hauptbremszylinder einer hydraulischen Bremseinrichtung ein Schwimmkolben gegenüber einer inneren Zylinderwandung des Hauptbremszylinders mittels einer Doppeldichtung bestehend aus einem radial inneren Gummiring und einem radial äußeren Gleitring aus Teflon mit Rechteckquerschnitt gleitgedichtet. Der radial innere Gummiring ist leicht vorgespannt und drückt den Gleitring gegen die radial innere Zylinderwandung. Die Herstellung einer solchen Doppeldichtung ist jedoch relativ aufwändig.

Der Erfindung liegt demgegenüber die Aufgabe zugrunde, ein Betriebsbremsventil der eingangs erwähnten Art derart fortzubilden, dass die genannten Probleme im Zusammenhang mit den unerwünschten Schwingungen des Kolbens auf möglichst einfache Weise vermieden werden.

Diese Aufgabe wird erfindungsgemäß durch die Merkmale von Anspruch 1 gelöst.

### Offenbarung der Erfindung

Der Erfindung liegt der Gedanke zugrunde, dass die kombinierten Führungs- und Dichtmittel wenigstens einen in wenigstens einer radial äußeren Ringnut des Führungsabschnitts des Druckstücks derart gehaltenes Führungsband beinhalten, dass das Führungsband gegen die radial innere Führungsfläche der Kolbenwand radial vorgespannt ist.

Diese radiale Vorspannung erzeugt Normalkräfte zwischen dem Führungsband und der Führungsfläche, welche wesentlich größer als die Normalkräfte, welche von in üblicher Weise montierten Führungsbändern auf die zugeordneten Führungsflächen ausgeübt werden. Durch die höheren Normalkräfte entstehen axiale Haft- und Gleitreibungskräfte zwischen dem Druckstück und dem Kolben, die als Dämpfungskräfte zwischen diesen Bauteilen wirken, so dass eventuelle axiale Relativschwingungen gedämpft werden und dadurch schnell abklingen.

Das Führungsband weist in Axialrichtung gesehen einen sich radial erweiternden Querschnitt auf. Insbesondere ist der Querschnitt des Führungsbands derart ausgebildet, dass ausgehend von dem einen axialen Ende bis zum anderen axialen Ende gesehen sich ein innerer Durchmesser und ein äußerer Durchmesser des Führungsbands vergrößert.

In diesem Falle basiert die radiale Vorspannung, aus welcher die Reibungs-, Dämpfungs- und Dichtungskräfte herrühren, auf der sich radial erweiternden Geometrie des Führungsbandes, welches zugleich das Druckstück am Kolben gleitführt.

Durch die in den Unteransprüchen aufgeführten Maßnahmen sind vorteilhafte Weiterbildungen und Verbesserungen der in Anspruch 1 angegebenen Erfindung möglich.

Gemäß einer bevorzugten Ausführungsform ist vorgesehen, dass das wenigstens eine Führungsband gegen die radial innere Führungsfläche der Kolbenwand derart radial vorgespannt ist, dass sich ohne Einbeziehung der Federmittel eine axiale Kraft in einem Bereich zwischen 3N und 15N aufgebracht werden muss, um das Druckstück entlang der radial inneren Führungsfläche des Kolbens axial verschieben zu können. Diese axiale Kraft wirkt dann als Dämpfungskraft zwischen dem Druckstück und dem Kolben im Falle von Relativschwingungen.

Besonders bevorzugt handelt es sich bei dem Betriebsbremsventil um ein pneumatisches Mehrkreis-Betriebsbremsventil, welches wenigstens zwei unabhängige pneumatische Kreise über axial hintereinander angeordnete Bremsventile steuert. Gleichfalls kann es sich um ein elektro-pneumatisches Mehrkreis-Betriebsbremsventil handeln, mit wenigstens einem elektrischen Kanal und wenigstens einem pneumatischen Kanal. Solche Betriebsbremsventile werden, weil sämtliche elektrischen Komponenten wie Drehwinkelgeber und mechanischen Komponenten in einem Modul zusammengefasst sind, auch Fußbremsmodul genannt.

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der Zeichnung zeigt
- Fig.1: eine schematische Querschnittsdarstellung eines pneumatischen Zweikreis-Betriebsbremsventils;

- Fig.2: einen vergrößerten Ausschnitt aus Fig.1 mit Führungsmitteln;
- Fig.3: einen vergrößerten Ausschnitt aus Fig.1 mit Führungsmitteln;
- Fig.4: einen vergrößerten Ausschnitt aus Fig.1 mit Führungsmitteln gemäß einer Ausführungsform der Erfindung.

### Beschreibung des Ausführungsbeispiels

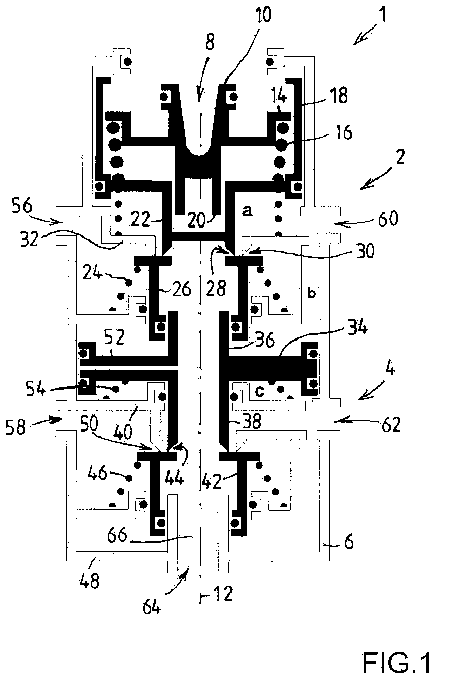

Das in Fig.1 gezeigte Betriebsbremsventil 1 ist ein pneumatisches Mehrkreis-Betriebsbremsventil, welches wenigstens zwei unabhängige pneumatische Kreise über zwei axial hintereinander angeordnete Bremsventile 2 und 4 steuert.

Das Betriebsbremsventil 1 hat ein Gehäuse 6 mit einer oberen Öffnung, in welche ein von einer hier nicht gezeigten Fußtrittplatte betätigter und ebenfalls hier nicht gezeigter Stößel ragt, dessen Ende in einer sacklochartigen Stößelaufnahme 8 eines Druckstücks 10 aufgenommen ist, um das Druckstück 10 bei Betätigung der Fußtrittplatte durch den Fahrer in axialer Richtung, d.h. entlang einer Mittelachse 12 zu bewegen.

Das Druckstück 10 ist mit einem kragenartig nach radial außen ragenden Führungsabschnitt 14 mittels Federmitteln, hier beispielsweise zweier parallel geschalteter Druck-Schraubenfedern 16 an einem Boden eines im Gehäuse 6 axial gleitgeführten Kolbens 18 abgestützt. Mittels eines rohrartigen Fortsatzes 20 sowie mittels des Führungsabschnitts 14 ist das Druckstück 10 wiederum innerhalb des Kolbens 18 axial geführt. Dazu ragt der rohrartige Fortsatz 20 des Druckstücks 10 in einen rohrartigen Fortsatz 22 des Kolbens 18 hinein, welcher an der vom Druckstück 10 weg weisenden Seite vom Boden des Kolbens 18 weg ragt. Das Ende des Fortsatzes 22 des Kolbens 18 dichtet in der in Fig.1 gezeigten Stellung gegenüber einem im Gehäuse 6 axial geführten und dort mittels Federmitteln 24 abgestützten ersten Ventilkörper 26 des ersten Bremsventils 2, um einen ersten inneren Ventilsitz 28 auszubilden.

Weiterhin ist der erste Ventilkörper 26 des ersten Bremsventils 2 mittels der Federmittel 24, hier beispielsweise eine Schrauben-Druckfeder gegen einen ersten äußeren Ventilsitz 30 am Gehäuse 6 vorgespannt. Zwischen dem Kolben 18 und einem ersten Zwischenboden 32 des Gehäuses 6 ist eine erste Kammer a ausgebildet. Diese Kammer a steht mit einer (Ring-)Kammer b ständig in Strömungsverbindung, welche radial durch das Gehäuse 6 und axial durch einen Zwischenkolben 34 begrenzt ist.

Mit einem oberen rohrförmigen Fortsatz 36 ist der Zwischenkolben 34 in einer zentralen Öffnung des ersten Ventilkörpers 26 geführt und mit einem unteren rohrförmigen Fortsatz 38 an einem zweiten Zwischenboden 40 des Gehäuses 6. Der untere Fortsatz 38 des Zwischenkolbens 34 bildet mit einem zweiten Ventilkörper 42 des zweiten Bremsventils 4 einen zweiten inneren Ventilsitz 44 aus. Der zweite Ventilkörper 42 des zweiten Bremsventils 4 ist ebenfalls durch Federmittel, insbesondere durch eine Druck-Schraubenfeder 46 am Gehäuse 6 abgestützt und hierdurch gegen den zweiten Zwischenboden 40 vorgespannt, um einen zweiten äußeren Ventilsitz 50 des zweiten Bremsventils 4 auszubilden.

Der Zwischenkolben 34 hat weiterhin einen radial nach außen ragenden Führungsabschnitt 52, mit welchem er im Gehäuse 6 axial verschieblich gelagert ist. Eine Druck-Schraubenfeder 54 spannt dabei den Zwischenkolben 34 in eine vom zweiten inneren Ventilsitz 44 abhebende Lage vor. Zwischen dem Zwischenkolben 34 und dem zweiten Zwischenboden 40 des Gehäuses 6 ist eine Kammer c ausgebildet.

Am Gehäuse 6 sind ein erster Vorratsanschluss 56 für den ersten Bremskreis und ein zweiter Vorratsanschluss 58 für den zweiten Bremskreis vorhanden, weiterhin ein erster Arbeitsanschluss 60 des ersten Bremskreises sowie ein zweiter Arbeitsanschluss 62 des zweiten Bremskreises. Über die beiden Vorratsanschlüsse 56, 58 werden die beiden Bremskreise mit Druckluft unter Vorratsdruck unabhängig voneinander versorgt, d.h. je Bremskreis ist vorzugsweise ein separater Druckluftvorrat vorgesehen, welcher dann über den betreffenden Vorratsanschluss 56, 58 den betreffenden Bremskreis versorgt. An den Arbeitsanschlüssen 60, 62 werden dann die Steuer- bzw. Bremsdrücke für die beiden Bremskreise ausgesteuert, welche durch Öffnen bzw. Schließen der beiden den Bremskreisen zugeordneten Bremsventile 2, 4 erzeugt werden. Dabei steht die erste Kammer a mit dem ersten Arbeitsanschluss 60 des ersten Bremskreises und die Kammer c mit dem zweiten Arbeitsanschluss 62 des zweiten Bremskreises in Strömungsverbindung.

Mittels einer zentralen, im Boden 48 des Gehäuses 6 ausgebildeten Entlüftung 64 können das erste und zweite Bremsventil 2, 4 jeweils Druck an dem betreffenden Arbeitsanschluss 60, 62 abbauen.

Nicht zuletzt weisen die beiden Ventilkörper 26, 42 und der Zwischenkolben 34 zentrale Durchgangsöffnungen auf, welche seriell hintereinander angeordnet einen zentralen Entlüftungskanal 66 ausbilden, welcher mit der Entlüftung 64 in Strömungsverbindung steht.

Vor diesem Hintergrund ist die Funktionsweise des Betriebsbremsventils 1 wie folgt:
Bei einer Betätigung der Fußtrittplatte drückt der Stößel über die Stößelaufnahme 8 das Druckstück 10 in Fig.1 nach unten. Diese auf das Druckstück 10 ausgeübte Druckkraft wird über die Schraubenfedern 16 auf den Kolben 18 übertragen, woraufhin dieser den ersten Ventilkörper 26 des ersten Bremsventils 2 nach unten drängt. Dadurch dichtet der Kolben 18 zwar gegen den ersten inneren Ventilsitz 28 ab, jedoch hebt der erste Ventilkörper 26 vom ersten äußeren Ventilsitz 30 ab, wodurch über den ersten Vorratsanschluss 56 Druckluft unter Vorratsdruck in die Kammer a und von dort an den ersten Arbeitsanschluss 60 gelangt, um den ersten Bremskreis zum Zuspannen seiner Bremsen zu belüften.

Wenn dann am Kolben 18 Kräftegleichgewicht herrscht zwischen der aus dem Druck in der Kammer a resultierenden Druckkraft und der Federkraft der zwischen dem Kolben 18 und dem Druckstück 10 wirkenden Schraubenfedern 16, so bewegt sich der Kolben 18 wieder nach oben, bis der erste äußere Ventilsitz 30 vom ersten Ventilkörper 26 wieder dichtend kontaktiert wird. Gleichzeitig bewegt der in der Kammer b herrschende Druck den Zwischenkolben 34 nach unten, wodurch dieser den zweiten Ventilkörper 42 des zweiten Bremsventils 4 nach unten drängt. Hierdurch hebt der zweite Ventilkörper 42 vom zweiten äußeren Ventilsitz 50 ab und öffnet so den Einlass des zweiten Bremskreises, wodurch Druckluft vom zweiten Vorratsanschluss 58 in die Kammer c und zum zweiten Arbeitsanschluss 62 zum Zuspannen der Bremsen des zweiten Bremskreises geleitet wird.

Wenn nun am Zwischenkolben 34 Kräftegleichgewicht zwischen der durch den Druck in der Kammer c erzeugten Druckkraft und der Federkraft der Druck-Schraubenfeder 54 einerseits und der durch den in der Kammer b wirkenden Druckkraft andererseits herrscht, so bewegt sich der Zwischenkolben 34 nach oben in seine Neutralstellung und der zweite Ventilkörper 42 kann getrieben durch die Federkraft der ihn belastenden Druck-Schraubenfeder 46 den zweiten äußeren Ventilsitz 50 wieder dichtend kontaktieren, so dass die Belüftung des zweiten Arbeitsanschlusses 62 abgeschlossen ist.

Auf diese Weise werden daher durch eine Betätigung der Fußtrittplatte beide Bremsventile 2, 4, hier jeweils durch Abheben der beiden Ventilkörper 26, 42 von den zugeordneten äußeren Ventilsitzen 30, 50 geöffnet, um die Arbeitsanschlüsse 60, 62 zum Zuspannen der Bremsen der betreffenden Bremskreise zu belüften.

Falls der Fahrer die Fußtrittplatte zum Lösen der Bremsen entlastet, so wird das Druckstück 10 nach oben bewegt, wodurch sich auch der Kolben 18 sowie der Zwischenkolben 34 nach oben bewegen, um dann von den beiden inneren Ventilsitzen 28, 44 abzuheben. Dadurch kann Druckluft von den beiden Arbeitsanschlüssen 60, 62 in den zentralen Entlüftungskanal 66 und von dort zur Entlüftung 64 gelangen, um die Bremsen der beiden Bremskreise zu entlüften.

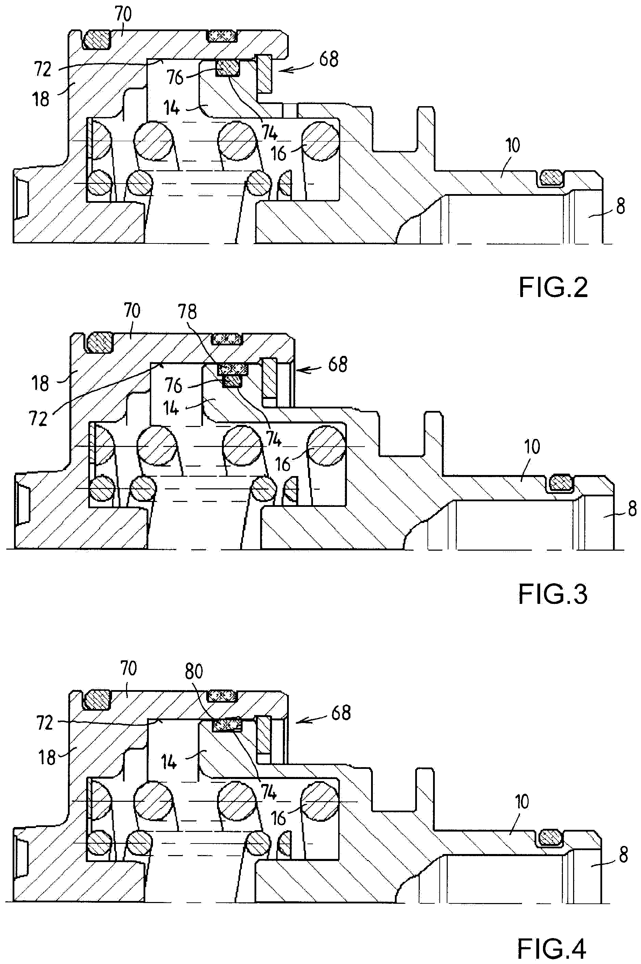

Im Folgenden wird nun die Führung des Druckstücks 10 im oder am Kolben 18 anhand der Figuren 2 bis 4 beschrieben. Zwischen der Kolbenwand 70 des Kolbens 18 und dem radial äußeren Führungsabschnitt 14 des Druckstücks 10 sind kombinierte Führungs- und Dichtmittel 68 zur Führung und Dichtung des Drucksstücks 10 an der radial inneren Führungsfläche 72 der Kolbenwand 70 des Kolbens 18 vorgesehen. Diese kombinierten Führungs- und Dichtmittel 68 sind in wenigstens einer radial äußeren Ringnut 74 des Führungsabschnitts 14 des Druckstücks 10 gehalten. Bei den Ausführungsbeispielen gemäß Fig.2 bis Fig.4 sind gleiche und gleich wirkende Bauteile und Baugruppen jeweils mit den gleichen Bezugszeichen gekennzeichnet.

Gemäß Fig.2 ist in der Ringnut 74 des Druckstücks 10 ein O-Ring 76 derart gehalten, dass er gegen die radial innere Führungsfläche 72 der Kolbenwand 70 des Kolbens 18 radial vorspannt.

Gemäß Fig.3 sind in der Ringnut 74 des Druckstücks 10 ein radial innerer O-Ring 76 und ein den O-Ring 76 umschließendes radial äußeres Führungsband 78 gehalten, wobei der radial innere O-Ring 76 das radial äußere Führungsband 78 von Innen kontaktiert und gegen die radial innere Führungsfläche 72 der Kolbenwand 70 des Kolbens 18 radial vorspannt. Das Führungsband 78 weist dabei bevorzugt einen rechteckigen Querschnitt auf, wobei die zur radial inneren Führungsfläche 72 der Kolbenwand 70 des Kolbens 18 weisende Außenfläche sowie eine zu einem Nutgrund der Ringnut 74 weisende Innenfläche des Führungsbands 78 jeweils parallel zur radial inneren Führungsfläche 72 der Kolbenwand 70 des Kolbens 18 und zum Nutgrund der Ringnut 74 angeordnet sind.

Eine Ausführungsform nach Fig. 4 sieht vor, dass das Führungsband 80 in Axialrichtung gesehen einen sich radial erweiternden Querschnitt aufweist. Insbesondere ist der Querschnitt des Führungsbands 80 derart ausgebildet, dass ausgehend von dem einen axialen Ende bis zum anderen axialen Ende gesehen sich ein innerer Durchmesser und ein äußerer Durchmesser des Führungsbands vergrößert. Dieses Führungsband weist daher keinen rechteckförmigen Querschnitt wie das Führungsband 78 von Fig.3 auf, sondern einen parallelogrammförmigen Querschnitt.

Die radiale Vorspannung des O-Rings 76 bzw. des Führungsbands 80 ist bei den beschriebenen Ausführungsbeispielen derart, dass sich ohne Einbeziehung der zwischen dem Druckstück 10 und dem Kolben 18 wirkenden Federmittel 16, d.h. bei einem lose im oder am Kolben 18 geführten Druckstück 10 eine axiale Kraft in einem Bereich zwischen 3 N und 15 N (Newton) aufgebracht werden muss, um das Druckstück 10 entlang der radial inneren Führungsfläche 72 des Kolbens 18 verschieben zu können. Die aus der Reibungshysterese herrührenden Kräfte liegen in einem Bereich von ca. 6 N bis 30 N (Newton). Diese axiale Kraft wirkt dann als Dämpfungskraft zwischen dem Druckstück 10 und dem Kolben 18 im Falle von Relativschwingungen zwischen diesen Bauteilen.

Anstatt an einem rein pneumatischen Mehrkreis-Betriebsbremsventil 1 kann **die Erfindung auch an einem elektro**-pneumatischen Mehrkreis-Betriebsbremsventil realisiert sein, mit wenigstens einem elektrischen Kanal und wenigstens einem pneumatischen Kanal.

### Bezugszeichenliste

- 1: Betriebsbremsventil
- 2: erstes Bremsventil
- 4: zweites Bremsventil
- 6: Gehäuse
- 8: Stößelaufnahme
- 10: Druckstück
- 12: Mittelachse
- 14: Führungsabschnitt
- 16: Schraubenfedern
- 18: Kolben
- 20: Fortsatz
- 22: Fortsatz
- 24: Federmittel
- 26: erster Ventilkörper
- 28: erster innerer Ventilsitz
- 30: erster äußerer Ventilsitz
- 32: erster Zwischenboden
- 34: Zwischenkolben
- 36: Fortsatz oben
- 38: Fortsatz unten
- 40: zweiter Zwischenboden
- 42: zweiter Ventilkörper
- 44: zweiter innerer Ventilsitz
- 46: Federmittel
- 48: Boden
- 50: zweiter äußerer Ventilsitz
- 52: Führungsabschnitt
- 54: Federmittel
- 56: erster Vorratsanschluss
- 58: zweiter Vorratsanschluss
- 60: erster Arbeitsanschluss
- 62: zweiter Arbeitsanschluss
- 64: Entlüftung
- 66: Entlüftungskanal
- 68: Dicht- und Führungsmittel
- 70: Kolbenwand
- 72: Führungsfläche
- 74: Ringnut
- 76: O-Ring
- 78: Führungsband
- 80: Führungsband

## Patentansprüche

1. Betriebsbremsventil (1) einer pneumatischen oder elektro-pneumatischen Fahrzeugbremsanlage beinhaltend ein Druckstück (10) mit einer sacklochartigen Stößelaufnahme (8) zur Aufnahme eines von einem Bremspedal betätigten Stößels, wobei das Druckstück (10) an einer radial inneren Führungsfläche (72) der Kolbenwand (70) eines Kolbens (18) gleitgeführt ist, auf welchen vom Druckstück (10) über Federmittel (16) Druckkräfte zur Betätigung einer Ventileinrichtung (2, 4) übertragbar sind und zwischen der radial inneren Führungsfläche (72) des Kolbens (18) und einem radial äußeren Führungsabschnitt (14) des Druckstücks (10) kombinierte Führungsmittel (68) zur Führung des Druckstücks (10) an der radial inneren Führungsfläche (72) der Kolbenwand (70) des Kolbens (18) vorgesehen sind, **dadurch gekennzeichnet, dass** das Führungsmittel (68) wenigstens einen in wenigstens einer radial äußeren Ringnut (74) des Führungsabschnitts (14) des Druckstücks (10) derart gehaltenes Führungsband (80) beinhaltet, dass das Führungsband (80) gegen die radial innere Führungsfläche (72) der Kolbenwand (70) radial vorgespannt ist, wobei das Führungsband (80) in Axialrichtung gesehen einen sich radial erweiternden Querschnitt aufweist, welcher derart ausgebildet ist, dass ausgehend von dem einem axialen Ende bis zum anderen axialen Ende gesehen sich ein innerer Durchmesser und ein äußerer Durchmesser des Führungsbands (80) vergrößert.

2. Betriebsbremsventil nach Anspruch 1, **dadurch gekennzeichnet, dass** der wenigstens das wenigstens eine Führungsband (80) gegen die radial innere Führungsfläche (72) der Kolbenwand (70) derart radial vorgespannt ist, dass sich ohne Einbeziehung der zwischen dem Druckstück (10) und dem Kolben (18) wirkenden Federmittel (16) eine axiale Kraft in einem Bereich zwischen 3N und 15N aufgebracht werden muss, um das Druckstück (10) entlang der radial inneren Führungsfläche (72) des Kolbens (18) verschieben zu können.

3. Betriebsbremsventil nach einem der vorhergehenden Ansprüche, **dadurch gekennzeichnet, dass** es ein pneumatisches Mehrkreis-Betriebsbremsventil ist, welches wenigstens zwei unabhängige pneumatische Kreise über axial hintereinander angeordnete Bremsventile (2, 4) steuert.

4. Betriebsbremsventil nach einem der vorhergehenden Ansprüche, **dadurch gekennzeichnet, dass** es ein elektro-pneumatisches Mehrkreis-Betriebsbremsventil ist, mit wenigstens einem elektrischen Kanal und wenigstens einem pneumatischen Kanal.

## Claims

1. A service brake valve (1) of a pneumatic or electro-pneumatic vehicle brake system containing a pressure pad (10) having a blind-hole-like tappet receiver (8) for receiving a brake-pedal-actuated tappet, the pressure pad (10) being slide-guided on a radially inner guide surface (72) of the piston wall (70) of a piston (18), it being possible to transmit pressure forces from the pressure pad (10) via spring means (16) to this piston (18) in order to actuate a valve device (2, 4), and there being provided between the radially inner guide surface (72) of the piston (18) and a radially outer guide section (14) of the pressure pad (10) combined guide means (68) for guiding the pressure pad (10) on the radially inner guide surface (72) of the piston wall (70) of the piston (18), **characterised in that** the guide means (68) contains at least one guide strip (80) that is held in at least one radially outer annular slot (74) of the guide section (14) of the pressure pad (10) such that the guide strip (80) is radially pre-tensioned against the radially inner guide surface (72) of the piston wall (70), the guide strip (80) when viewed in axial direction having a radially enlarging cross section that is configured such that when viewed from one axial end towards the other axial end an internal diameter and an external diameter of the guide strip (80) increase.

2. A service brake valve according to claim 1, **characterised in that** the at least one guide strip (80) is radially pre-tensioned against the radially inner guide surface (72) of the piston wall (70) such that without the involvement of the spring means (16) acting between the pressure pad (10) and the piston (18) an axial force has to be applied in a region between 3N and 15 N in order to be able to move the pressure pad (10) along the radially inner guide surface (72) of the piston (18).

3. A service brake valve according to any of the preceding claims, **characterised in that** it is a pneumatic multi-circuit service brake valve that controls at least two independent pneumatic circuits via brake valves (2, 4) that are arranged axially one behind the other.

4. A service brake valve according to any of the preceding claims, **characterised in that** it is an electro-pneumatic multi-circuit service brake valve having at least one electrical channel and at least one pneumatic channel.

## Revendications

1. Soupape (1) de frein de service d'un système pneumatique ou électropneumatique de frein de véhicule, comportant une pièce (10) d'application d'une pression, ayant un logement (8) de type en trou borgne pour recevoir un poussoir actionné par une pédale de frein, la pièce (10) d'application d'une pression étant guidée à glissement sur une surface (72) intérieure radialement de guidage de la paroi (70) d'un piston (8), auquel il peut être appliqué, par la pièce (10) d'application d'une pression, par l'intermédiaire de moyen (16) à ressort, des forces de pression pour actionner un dispositif (2, 4) de soupape et il est prévu, entre la surface (72) intérieure radialement de guidage du piston (18) et une partie (14) extérieure radialement de guidage de la pièce (10) d'application d'une pression, des moyens (68) combinés de guidage pour guider la pièce (10) d'application d'une pression sur la surface (72) intérieure radialement de guidage de la paroi (70) du piston (18), **caractérisée en ce que** le moyen (68) de guidage comporte une bande (80) de guidage retenue dans au moins une rainure (74) annulaire extérieure radialement de la partie (14) de guidage de la pièce (10) d'application d'une pression, de manière à précontraindre radialement la bande (80) de guidage sur la surface (72) intérieure radialement de guidage de la paroi (70) du piston, la bande (80) de guidage ayant, considéré dans la direction axiale, une section transversale s'élargissant radialement et constituée de manière à ce que, considéré d'une extrémité axiale à l'autre, un diamètre intérieur et un diamètre extérieur de la bande (80) de guidage s'agrandisse.

2. Soupape de frein de service suivant la revendication 1, **caractérisée en ce que** la au moins une bande (80) de guidage est précontrainte radialement sur la surface (72) intérieure radialement de guidage de la paroi (70) du piston, de manière à ce que, sans l'inclusion des moyens (16) de ressort agissant entre la pièce (10) d'application d'une pression et le piston (18), une force axiale, dans une plage comprise entre 3N et 15N, doit être appliquée pour pouvoir déplacer la pièce (10) d'application d'une pression le long de la surface (72) intérieure radialement de guidage du piston (18).

3. Soupape de frein de service suivant l'une des revendications précédentes, **caractérisée en ce que** c'est une soupape de frein de service pneumatique à plusieurs circuits, qui commande au moins deux circuits pneumatiques indépendants par des soupapes (2, 4) de frein montées axialement l'une derrière l'autre.

4. Soupape de frein de service suivant l'une des revendications précédentes, **caractérisée en ce que** c'est une soupape de frein de service électropneumatique à plusieurs circuits, ayant au moins un canal électrique et au moins un canal pneumatique.
